# EUROPÄISCHE PATENTSCHRIFT

(11) **EP 0 826 523 B1**
(45) Veröffentlichungstag und Bekanntmachung des Hinweises auf die Patenterteilung: **30.05.2001**
(21) Anmeldenummer: 97114444.9
(22) Anmeldetag: 21.08.1997
(51) Int. Cl.: B60C 11/11, B60C 11/04, B60C 11/12, B60C 11/13

(54) **Fahrzeugluftreifen**
Vehicle tyre
Bandage pneumatique pour véhicule

(30) Priorität: 28.08.1996 DE 19635147
(43) Veröffentlichungstag der Anmeldung: 04.03.1998
(73) Patentinhaber: Continental Aktiengesellschaft, 30165 Hannover (DE)
(72) Erfinder: Peschel, Wolfgang, 30823 Garbsen (DE); Diensthuber, Franz, 30559 Hannover (DE)

(56) Entgegenhaltungen:
- EP-A- 0 477 542
- EP-A- 0 485 883
- DE-A- 4 326 036
- FR-A- 2 383 029

## Beschreibung

Die vorliegende Erfindung betrifft einen Fahrzeugreifen, insbesondere für den Einsatz unter winterlichen Fahrbedingungen, mit einem Laufstreifenprofil welches durch in Umfangsrichtung verlaufende Nuten und durch Quernuten in je eine Schulterblockreihe und je ein Paar von Blockreihen im Mittelbereich des Laufstreifens gegliedert ist, wobei die beiden Paare von Blockreihen durch eine zentrale, in Umfangsrichtung umlaufende Nut voneinander getrennt sind, und wobei die Blöcke in sämtlichen Blockreihen jeweils mit einer Vielzahl von untereinander parallel verlaufenden Lamellenfeineinschnitten versehen sind, von welchen jene in den Blöcken der Blockreihenpaare verlaufenden im wesentlichen in Profilquerrichtung orientiert sind.

Ein Fahrzeugluftreifen mit einem derartigen Laufstreifenprofil ist beispielsweise in der europäischen Patentanmeldung EP 729 854 A offenbart. Die Blöcke der der zentralen Umfangsnut benachbarten Blockreihen sind in Umfangsrichtung jeweils durch eine Nut voneinander getrennt, die sich aus einem breiten und einem schmalen Nutabschnitt zusammensetzt. Auch die in Querrichtung jeweils benachbarten Blöcke der beiden Blockreihen auf jeder Seite der zentralen Umfangsnut sind durch eine solche Kombination aus einem breiten und einem schmalen Nutabschnitt voneinander getrennt. Dabei besitzen die schmalen Nutabschnitte jeweils eine geringere Tiefe als die breiteren Nutabschnitte. Die jedes Paar von Blockreihen voneinander trennenden Nuten bilden dabei zumindest im wesentlich in Umfangsrichtung umlaufende Nuten. Die geschilderte Ausgestaltung der sowohl die Mittelblockreihen untereinander als auch die Blöcke innerhalb dieser Blockreihen trennenden Nuten mit schmalen und breiten Nutabschnitten, die zudem auch noch unterschiedliche Tiefen besitzen, bewirkt eine gewisse Ankopplung der Blöcke, die sich auf die Profilstabilität im gesamten Laufstreifenmittelbereich günstig auswirkt. Da die Blöcke in den Mittelblockreihen verhältsnismäßig schmal sind, sind die etwa in Profilquerrichtung verlaufenden Lamellenfeineinschnitte relativ kurz. Somit könnte dieses Laufstreifenprofil hinsichtlich des Schnee- und Eisgriffes noch verbessert werden. Dies trifft auch auf andere bekannte Laufstreifenprofile für Winterreifen zu, die mit einem Profil, welches sechs Blockreihen, und/oder Profilbänder umfaßt wie das erwähnte Laufstreifenprofil, versehen sind.

Die Erfindung hat sich daher die Aufgabe gestellt, bei einem Reifen der eingangs genannten Art den Laufstreifenmittelbereich so zu gestalten, daß vor allem Schnee-und Eisgriff verbessert werden.

Gelöst wird die gestellte Aufgabe erfindungsgemäß dadurch, daß die Blöcke der beiden Paare von Mittelblockreihen voneinander jeweils durch den längeren Abschnitt einer unter einem stumpfen Winkel zur Umfangsrichtung verlaufenden Rille und durch den einen Abschnitt einer Quernut, die unter einem spitzen Winkel zur Umfangsrichtung verläuft, getrennt sind, wobei die Blöcke der der zentralen Umfangsnut jeweils benachbarten Blockreihen durch den zweiten Abschnitt der Rille und die Blöcke der beiden weiteren Blockreihen durch den zweiten Abschnitt der Quemut voneinander getrennt sind, und wobei die Quernuten von den schulterseitig verlaufenden Umfangsnuten ausgehend bis zu den Rillen verlaufen und in diese einmünden.

Diese erfindungsgemäße Ausgestaltung bedingt Blockstrukturen in den Mittelblockreihen mit Blöcken, die gegenüber anderen Ausführungen mit vier Mittelblockreihen über einen Teil ihrer Erstreckung in Reifenquerrichtung wesentlich breiter ausgeführt sind, da sich die Blöcke der beiden auf jeder Seite der zentralen Umfangsnut verlaufenden Blockreihen, in Reifenquerrichtung betrachtet, zum Teil überlappen. Dies hat zur Folge, daß die zumindest im wesentlichen in Profilquerrichtung verlaufenden Lamellenfeineinschnitte nicht nur relativ lang ausgeführt sind, sondern in diesen Blöcken an jenen Blockkanten, die durch die Quernuten und durch die Rillen begrenzt sind, Einmündungsbereiche besitzen, die mit diesen Kanten einen von 90° deutliche abweichenden Winkel einschließen. Eine solche Ausgestaltung erhöht einerseits die zur Verfügung stehende Griffkantanlänge und hat andererseits ein verbessertes Öffnungsvermögen der Lamellenfeineinschnitte zur Folge, was, auf schneeigem oder eisigem Untergrund den Griff erheblich verbessert. Wie schon erwähnt, werden durch die erfindungsgemäße Ausgestaltung die Blöcke breiter als bei vergleichbaren Profilen aus dem Stand der Technik, was insgesamt auch für die Seitenführungseigenschaften des Reifens von Vorteil ist.

Um den erwähnten Überlappungsbereich der Blöcke in den beiden Paaren von Mittelblockreihen optimal zu gestalten, ist es von Vorteil, wenn der die Blöcke der der zentralen Umfangsnut benachbarten Blockreihen trennende Abschnitt der Rille kürzer ist als der andere Abschnitt dieser Rille. Dabei ist es ferner auch günstig, wenn die beiden Abschnitte der Quernut im wesentlichen gleich lang sind.

Gemäß einer bevorzugten Ausführungsform der Erfindung beträgt der spitze Winkel, den die Quernuten über ihren Verlauf mit der Umfangsrichtung einschließen, zwischen 40° und 70°, insbesondere zwischen 50° und 60°. Der stumpfe Winkel, den die Rillen mit der Umfangsrichtung einschließen, beträgt bevorzugt zwischen 130° - 160°, insbesondere zwischen 140° und 150°. Diese Ausgestaltung unterstützt die Abstimmung der erzielbaren Griffeigenschaften auf das Handling- und Aquaplaningverhalten

Nach einem weiteren Merkmal der Erfindung sind dabei die Rillen schmäler ausgeführt als die Quernuten.

Erfindungsgemäß werden ferner jene Abschnitte der Rillen, die die Blöcke in den der zentralen Umfangsnut benachbarten Blockreihen voneinander trennen, mit einer geringeren Tiefe, die zwischen 60 und 80%, insbesondere ca. 70%, der Dessintiefe beträgt, ausgeführt. Diese Maßnahme bewirkt eine gewisse Ankopplung der Blöcke in diesen Blockreihen aneinander, was für die Profilstabilität im Zentralbereich des Laufstreifens von Vorteil ist.

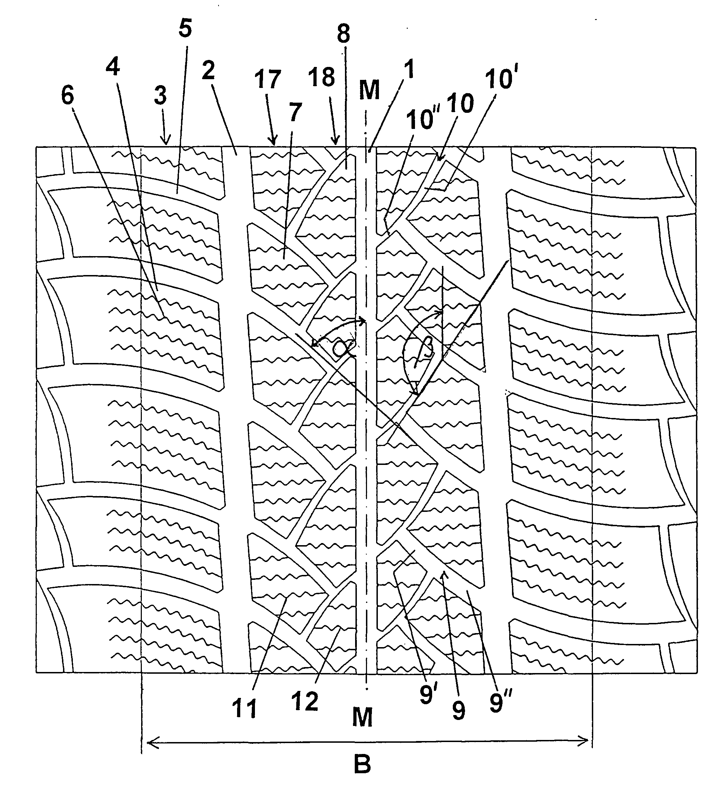

Weitere Merkmale, Vorteile und Einzelheiten der Erfindung werden nun anhand der Zeichnung, die ein Ausführungsbeispiel darstellt, näher beschrieben. Dabei ist in der einzigen Zeichnungsfigur eine Draufsicht auf eine Teilabwicklung eines Ausführungsbeispieles eines Laufstreifenprofiles für einen Fahrzeugluftreifen dargestellt.

Dieses Laufstreifenprofil ist vorrangig für PKW-Reifen vorgesehen, die unter winterlichen Fahrbedingungen, insbesondere auf schneeigem, eisigem oder naßem Untergrund, gefahren werden. Dabei besitzt das Laufstreifenprofil eine entlang der Umfangsmittellinie M-M verlaufende zentrale Umfangsnut 1, an diese beidseitig anschließende Blockstrukturen im Mittelbereich, die noch näher beschrieben werden, und schulterseitig je eine Schulterblockreihe 3, die durch breite Umfangsnuten 2 von den Blockstrukturen im Mittelbereich getrennt sind. Die Schulterblockreihen 3 verlaufen dabei über den bodenberührenden Teil des Reifens (Laufstreifenbreite B = Breite in der Bodenaufstandsfläche gemäß E.T.R.T.O.-Standards) hinaus.

Die Schulterblöcke 4 der Schulterblockreihen 3 sind durch Quernuten 5 voneinander getrennt, wobei die Ausführung so getroffen ist, daß die die Quernuten 5 begrenzenden Blockkanten leicht bogenförmig verlaufen. Die die Umfangsnuten 2 begrenzenden Kanten der Schulterblöcke 4 sind nicht exakt in Umfangsrichtung ausgerichtet, sondern weichen von der Umfangsrichtung (Umfangsmittellinie M-M) um einen kleinen Winkel, der zwischen 2° und 10° gewählt wird, ab. Diese Ausrichtung der die Umfangsnuten 2 begrenzenden Kanten der Schulterblöcke 4 zeigt günstige Auswirkungen auf Schnee- und Eisgriff.

Die Schulterblöcke 4 sind ferner jeweils mit einer Anzahl von in Draufsicht zick-zack oder wellenförmig verlaufenden Lamellenfeineinschnitten 6 versehen, die zumindest im wesentlichen parallel zu den Quernuten 5 und, ausgehend von den Umfangsnuten 2, über die Laufstreifenbreite B hinausverlaufen.

Die erwähnte Blockstruktur im Mittelbereich des Profiles besteht jeweils auf jeder Seite der Umfangsmittellinie M-M aus je einem Paar von Blockreihen 17, 18 mit Blöcken 7,8 , wobei die den Umfangsnuten 2 benachbarten Blöcke 7 eine im wesentlichen trapezförmige Grundgestalt besitzen. Die Blöcke 8 in den der zentralen Umfangsnut 1 benachbarten Blockreihen 18 besitzen die Grundgestalt eines unregelmäßigen Viereckes. Die Ausgestaltung der Blöcke 7,8 und deren Anordnung zueinander ist dabei so getroffen, daß die Blöcke 7,8 der beiden Paare von Mittelblockreihen 17,18 voneinander jeweils durch den einen, längeren Abschnitt 10' einer unter einem stumpfen Winkel β zur Umfangsrichtung verlaufenden Rille 10 und durch den einen Abschnitt 9' einer Quernut 9, die unter einem spitzen Winkel α zur Umfangsrichtung verläuft, voneinander getrennt sind. Die Blöcke 8, der der zentralen Umfangsnut 1 jeweils benachbarten Blockreihen 18 sind untereinander durch den zweiten Abschnitt 10" der Rille 10 und die Blöcke 7 der beiden weiteren Blockreihen 17 durch den zweiten Abschnitt 9" der Quernut 9 voneinander getrennt.

Sowohl die Quernuten 9 als auch die Rillen 10 besitzen jeweils einen leicht bogenförmig gekrümmten Verlauf, wobei der spitze Winkel α, den die Quernuten 9 mit der Umfangsmittellinie M-M einschließen, in einem Bereich von 40° - 70°, insbesondere 50° - 60°, gewählt wird und der stumpfe Winkel β, unter dem die Rillen 10 zur Umfangsmittellinie M-M verlaufen, zwischen 130° und 160°, insbesondere zwischen140° und 150°, beträgt.

Jede Quernut 9 mündet mit ihrem einen Ende in die Umfangsnut 2 und mit ihrem anderen Ende in die Rille 10 und bewirkt dort die Teilung in die beiden Rillenabschnitte 10', 10". Die Quernuten 9 sind breiter ausgeführt als die Rillen 10, wobei erstere eine Breite von 3 - 6mm besitzen, letztere eine Breite von 1 - 3mm. Sowohl die Quernuten 9 als auch die Rillen 10 werden über ihren Verlauf zur Laufstreifenmitte zu kontinuierlich etwas schmäler. Betrachtet man die Einmündungsbereiche der Rillenabschnitte 10" in die zentrale Umfangsnut 1, so ist die gegenseitige Anordung der durch diese zentrale Umfangsnut 1 getrennten Blockreihen 18 so getroffen, daß jeweils zwei Eimündungsbereiche der Rillenabschnitte 10", die auf beiden Seiten der zentralen Umfangsnut 1 liegen, zumindest im wesentlichen miteinander fluchtend ausgerichtet sind. Die Ausrichtung der Quernuten 9 zu den Quernuten 5 in den Schulterblockreihen 3 erfolgt bevorzugt ebenfalls so, daß hier eine zumindest im wesentlichen fluchtende Anordnung vorliegt. Diese Maßnahme unterstützt ein gutes Aquaplaningverhalten des Laufstreifenprofiles.

Die Quernuten 9 werden bevorzugt über ihre gesamte Länge in voller Dessintiefe ausgeführt, ebenso die Rillenabschnitte 10', wobei es aber günstig ist, die Rillenabschnitte 10" mit einer geringeren Tiefe zu wählen, als die generelle Dessintiefe, die im allgemeinen zwischen 7,5 und 9mm gewählt wird. Die Tiefe der Rillenabschnitte 10" wird zwischen 60 und 80%, insbesondere ca. 70% der Dessintiefe gewählt. Dadurch ergibt sich eine gewisse Anbindung der Blöcke 8 in jeder Blockreihe 18, die für die Profilstabilität und damit auch für einen gleichmäßigen Abrieb von Vorteil ist.

Jene Blockkanten der Blöcke 7, die die Umfangsnuten 2 begrenzen, sind ebenso wie die korrespondierenden Blockkanten der Schulterblöcke 4 unter einem kleinen Winkel zur Umfangsrichtung geneigt und vorzugsweise zu den erwähnten Blockkanten der Schulterblöcke 4 parallel ausgerichtet.

Durch die geschilderte Ausgestaltung der Blöcke 7,8 und den damit einhergehenden Verlauf der Rillen 10 und der Quernuten 9 ergeben sich, in Reifenquerrichtung betrachtet, Überlappungsbereiche der Blöcke 7,8 jedes Paares von Blockreihen 17,18. Eine Optimierung dieses Überlappungsbereiches erfolgt dadurch, daß die beiden Quemutabschnitte 9', 9" jeweils in etwa gleich lang gewählt werden, die Rillenabschnitte 10", die die Blöcke 8 innerhalb jeder Blockreihe 18 voneinander trennen, jedoch kürzer sind als die Rillenabschnitte 10'. Aus Gründen der Profilstabilität im zentralen Bereich des Laufstreifenprofiles sollte dabei jeder Rillenabschnitt 10" eine Länge besitzen, die mindestens % der Länge des anderen Rillenabschnittes 10' beträgt. Durch den kurzen Abschnitt 10" ist auch sichergestellt, daß die Quernuten 9 relativ weit in den zentralen Bereich des Laufstreifenprofiles reichen, was wiederum für das Aquaplaningverhalten von Vorteil ist.

Auch die Blöcke 7,8 sind jeweils mit einer Vielzahl von Lamellenfeineinschnitten 11,12 versehen. Die Lamellenfeineinschnitte 11,12 durchqueren die Blöcke 7,8 zumindest im wesentlichen in Reifenquerrichtung und sind untereinander parallel ausgerichtet. Auch diese Lamellenfeineinschnitte 11,12 sind zick-zack bzw. wellenförmig gestaltet. Durch die geschilderte Überlappung der Blöcke 7,8 ergibt sich im Mittelbereich des Laufstreifens eine sehr effektive Feineinschnittanordnung, und zwar einerseits durch die Möglichkeit einer relativ großen Länge der Feineinschnitte 11,12 und andererseits durch deren Einmündungsbereiche in die Nuten 9 und die Rillen 10, wo von 90° deutlich abweichende Mündungswinkel gegeben sind. Damit geht eine Erhöhung der Längen von Griffkanten und eine Verbesserung des Öffnungsvermögens der Lamellenfeineinschnitte einher. Dies zeigt vor allem günstige Auswirkungen auf das Traktions- und das Bremsverhalten auf eisigen und schneeigen Untergrund.

Sämtliche Lamellenfeineinschnitte 6,11,12 besitzen eine Breite, die im Bereich von 0,4 - 0,8 mm, insbesondere 0,5 mm, gewählt wird, sie können über ihren gesamten bzw. im wesentlichen gesamten Verlauf auf Dessintiefe ausgeführt sein, besitzen jedoch bevorzugt, wie bekannt, über ihren Verlauf sich ändernde Tiefe.

## Patentansprüche

1. Fahrzeugreifen, insbesondere für den Einsatz unter winterlichen Fahrbedingungen, mit einem Laufstreifenprofil welches durch in Umfangsrichtung verlaufende Nuten (1,2) und durch Quernuten (5,9) in je eine Schulterblockreihe (3) und je ein Paar von Blockreihen (17,18) im Mittelbereich des Laufstreifens gegliedert ist, wobei die beiden Paare von Blockreihen (17,18) durch eine zentrale, in Umfangsrichtung umlaufende Nut voneinander getrennt sind, und wobei die Blöcke (4,7,8) in sämtlichen Blockreihen jeweils mit einer Vielzahl von untereinander parallel verlaufenden Lamellenfeineinschnitten (6,11) versehen sind, von welchen jene in den Blöcken (7,8) der Blockreihenpaare verlaufenden im wesentlichen in Profilquerrichtung orientiert sind, dadurch gekennzeichnet, daß die Blöcke (7,8) der beiden Paare von Mittelblockreihen (17,18) voneinander jeweils durch den längeren Abschnitt (10') einer unter einem stumpfen Winkel (β) zur Umfangsrichtung verlaufenden Rille (10) und durch den einen Abschnitt (9') einer Quernut (9), die unter einem spitzen Winkel (α) zur Umfangsrichtung verläuft, getrennt sind, wobei die Blöcke (8) der der zentralen Umfangsnut (1) jeweils benachbarten Blockreihen (18) durch den zweiten Abschnitt (10") der Rille (10) und die Blöcke (7) der beiden weiteren Blockreihen (17) durch den zweiten Abschnitt (9") der Quernut (9) voneinander getrennt sind, und wobei die Quernuten (9) von den schulterseitig verlaufenden Umfangsnuten (2) ausgehend bis zu den Rillen (10) verlaufen und in diese einmünden.

2. Fahrzeugreifen nach Anspruch 1, dadurch gekennzeichnet, daß der die Blöcke (8) der der zentralen Umfangsnut (1) benachbarten Blockreihen (18) trennende Abschnitt (10") der Rille (10) kürzer ist als der andere Abschnitt (10') dieser Rille (10).

3. Fahrzeugreifen nach Anspruch 1, dadurch gekennzeichnet, daß die beiden Abschnitte (9', 9") der Quernut (9) im wesentlichen gleichlang ist.

4. Fahrzeugreifen nach einem der Ansprüche 1 bis 3, dadurch gekennzeichnet, daß der spitze Winkel (α), den die Quernuten (9) über ihren Verlauf mit der Unfangsrichtung einschließen, zwischen 40° und 70°, insbesondere zwischen 50° und 60° beträgt.

5. Fahrzeugreifen nach einem der Ansprüche 1 bis 4, dadurch gekennzeichnet, daß der stumpfe Winkel (β), den die Rillen (10) mit der Umfangsrichtung einschließen, zwischen 130° und 160°, insbesondere zwischen 140° und 150°, beträgt.

6. Fahrzeugreifen nach einem der Ansprüche 1 bis 5, dadurch gekennzeichnet, daß die Rillen (10) schmäler ausgeführt sind als die Quernuten (9).

7. Fahrzeugreifen nach einem der Ansprüche 1 bis 6, dadurch gekennzeichnet, daß jene Abschnitte (10") der Rillen (10), die die Blöcke (8) in den der zentralen Umfangsnut (1) benachbarten Blockreihen (18) voneinander trennen, mit einer geringeren Tiefe, die zwischen 60 und 80%, insbesondere ca. 70%, der Dessintiefe beträgt, ausgeführt sind.

## Claims

1. Vehicle tyre, more especially for use in wintry driving conditions, including a tread strip profile which is divided into a respective row of shoulder blocks (3) and a respective pair of rows of blocks (17, 18) in the central region of the tread strip by means of grooves (1, 2), which extend in the circumferential direction, and by means of transverse grooves (5, 9), the two pairs of rows of blocks (17, 18) being separated from each other by means of a central groove (1), which extends in the circumferential direction, and the blocks (4, 7, 8) in all of the rows of blocks being each provided with a plurality of fine laminar incisions (6, 11), which extend parallel to and below one another, those incisions which extend in the blocks (7, 8) of the pairs of rows of blocks being orientated substantially in the transverse direction of the profile, characterised in that the blocks (7, 8) of the two pairs of rows of central blocks (17, 18) are each separated from one another by means of the longer portion (10') of a notch (10), which extends at an obtuse angle (β) relative to the circumferential direction, and by means of one portion (9') of a transverse groove (9), which extends at an acute angle (α) relative to the circumferential direction, the blocks (8) of the rows of blocks (18), respectively adjacent the central circumferential groove (1), being separated from one another by meansof the second portion (10") of the notch (10), and the blocks (7) of the two additional rows of blocks (17) being separated from one another by means of the second portion (9") of the transverse groove (9), and the transverse grooves (9) extending from the circumferential grooves (2), which extend on the shoulder side, to the notches (10) and terminating in said notches.

2. Vehicle tyre according to claim 1, characterised in that the portion (10") of the notch (10) separating the blocks (8) of the rows of blocks (18) adjacent the central circumferential groove (1) is shorter than the other portion (10') of this notch (10).

3. Vehicle tyre according to claim 1, characterised in that the two portions (9', 9") of the transverse groove (9) have substantially identical lengths.

4. Vehicle tyre according to one of claims 1 to 3, characterised in that the acute angle (α), which the transverse grooves (9) form over their course with the circumferential direction, is between 40° and 70°, more especially between 50° and 60°.

5. Vehicle tyre according to one of claims 1 to 4, characterised in that the obtuse angle (β), which the notches (10) form with the circumferential direction, is between 130° and 160°, more especially between 140° and 150°.

6. Vehicle tyre according to one of claims 1 to 5, characterised in that the notches (10) are narrower than the transverse grooves (9).

7. Vehicle tyre according to one of claims 1 to 6, characterised in that those portions (10") of the notches (10), which separate from one another the blocks (8) in the rows of blocks (18) adjacent the central circumferential groove (1), are provided with a relatively small depth which is between 60 and 80 %, more especially approx. 70 %, of the pattern depth.

## Revendications

1. Pneumatique de véhicule, en particulier pour emploi dans des conditions de conduite hivernales, présentant un profil de la bande de roulement qui est subdivisé, par des rainures (1, 2) orientées selon la direction périphérique et par des rainures transversales (5, 9), en une rangée de blocs (3) dans chaque épaulement et en, chaque fois, une paire de rangées de blocs (17, 18) dans la zone médiane de la bande de roulement, les deux paires de rangées de blocs (17, 18) étant séparées l'une de l'autre par une rainure centrale (1), orientée selon la direction périphérique, et les blocs (4, 7, 8) étant, dans chacune de toutes les rangées de blocs, munis d'une pluralité de fines incisions (6, 11) qui sont faites au moyen des lamelles, sont orientées parallèlement l'une à l'autre et dont chacune des incisions courant dans les blocs (7, 8) des paires de rangées de blocs est sensiblement orientée selon la direction transversale du profil, caractérisé par le fait que les blocs (7, 8) des deux paires des rangées de blocs médianes (17, 18) sont chacun séparés l'un de l'autre par le plus long tronçon (10')d'une cannelure (10) orientée sous un angle obtus (β) par rapport à la direction périphérique et par le premier tronçon (9') d'une rainure transversale (9) orientée sous un angle aigu (α) par rapport à la direction périphérique, les blocs (8) des rangées de blocs (18) respectivement voisines de la rainure périphérique centrale (1) étant séparés l'un de l'autre par le second tronçon (10") de la cannelure (10) et les blocs (7) des deux autres rangées de blocs (17) l'étant par le second tronçon (9") de la rainure transversale (9), et les rainures transversales (9), partant des rainures périphériques (2) courant du côté épaulement, courant jusqu'aux cannelures (10) et y débouchant.

2. Pneumatique de véhicule selon la revendication 1, caractérisé par le fait que le tronçon (10") de la cannelure (10) qui sépare les blocs (8) des rangées de blocs (18) voisines de la rainure périphérique centrale (1) est plus court que l'autre tronçon (10') de cette cannelure (10).

3. Pneumatique de véhicule selon la revendication 1, caractérisé par le fait que les deux tronçons (9' 9") de la rainure transversale (9) sont sensiblement de même longueur.

4. Pneumatique de véhicule selon l'une des revendications 1 à 3, caractérisé par le fait que l'angle aigu (α) que fait avec la direction périphérique l'allure des rainures transversales (9) vaut entre 40° et 70°, en particulier entre 50° et 60°.

5. Pneumatique de véhicule selon l'une des revendications 1 à 4, caractérisé par le fait que l'angle obtus (β) que font les cannelures (10) avec la direction périphérique vaut entre 130° et 160°, en particulier entre 140° et 150°.

6. Pneumatique de véhicule selon l'une des revendications 1 à 5, caractérisé par le fait que les cannelures (10) sont de réalisation plus étroite que les rainures transversales (9).

7. Pneumatique de véhicule selon l'une des revendications 1 à 6, caractérisé par le fait que tous les tronçons (10") des cannelures (10), qui séparent l'un de l'autre les blocs (8)) dans les rangées de blocs (18) voisines de la rainure périphérique centrale (1), sont réalisés avec une moindre profondeur qui vaut entre 60 et 80 %, en particulier environ 70 %, de la profondeur du motif.
